Europäisches Patentamt

European Patent Office

Office européen des brevets

(11) Numéro de publication: **0 1 1 9 1 8 2**
**B 1**

(12) **FASCICULE DE BREVET EUROPEEN**

(45) Date de publication du fascicule du brevet:
**20.04.88**

(51) Int. Cl.⁴: **C 21 D 9/38**, C 21 D 1/09,
B 21 B 27/00, B 23 K 26/14

(21) Numéro de dépôt: **84870029.0**

(22) Date de dépôt: **22.02.84**

(54) Procédé pour améliorer l'état de surface d'un cylindre.

(30) Priorité: **11.03.83 LU 84687**

(43) Date de publication de la demande:
**19.09.84 Bulletin 84/38**

(45) Mention de la délivrance du brevet:
**20.04.88 Bulletin 88/16**

(84) Etats contractants désignés:
**AT FR GB IT NL SE**

(56) Documents cités:
**FR - A - 2 476 524**
**GB - A - 2 040 824**

**PATENTS ABSTRACTS OF JAPAN, vol. 5, no. 195(C-83)(867), 11 décembre 1981**
**METAL SCIENCE AND HEAT TREATMENT, vol. 24, no. 9/10, septembre/octobre 1982, pages 629-632, New York, USA; A.G. GRIGOR'YANTS et al.: "Structure and hardness of steel 45 after irridation with a C02 laser"**

(73) Titulaire: **CENTRE DE RECHERCHES METALLURGIQUES CENTRUM VOOR RESEARCH IN DE METALLURGIE Association sans but lucratif, Vereniging zonder winstoogmerk Rue Montoyer, 47, B-1040 Bruxelles (BE)**

(72) Inventeur: **Crahay, Jean René, 334, Ster, B-4878 Francorchamps (BE)**

(74) Mandataire: **Pirmolin, Guy Jean, CENTRE DE RECHERCHES METALLURGIQUES Abbaye du Val Benoît 11, rue Ernest Solvay, B-4000 Liege (BE)**

## Description

La présente invention concerne un procédé pour former une rugosité isotrope à la surface d'un cylindre, en particulier d'un cylindre de laminoir ou de recuit continu, à l'aide d'un faisceau corpusculaire focalisé, tel qu'un faisceau laser ou un faisceau d'électrons.

On sait que l'état de surface des cylindres de laminoir, en particulier leur rugosité, conditionne dans une très large mesure la qualité surperficielle des tôles métalliques. En particulier, il est possible de conférer aux tôles, au cours du laminage de réduction au moyen de cylindres appropriés, une rugosité qui permet d'éviter le collage des spires lors du recuit en bobines. D'autre part, la rugosité des tôles ayant subi un laminage d'écrouissage après le recuit influence sensiblement leur aptitude à subir une opération de formage et à recevoir un revêtement.

On a déjà cherché à remplacer la rugosité aléatoire des cylindres, telle qu'elle résultait par exemple du grenaillage, par une rugosité de type déterministe dont la distribution pourrait être maîtrisée plus aisément.

Il a notamment été proposé, par le brevet belge No 880 996, d'effectuer des microperforations à la surface des cylindres de laminoir à l'aide d'un faisceau laser. Selon ce procédé connu, un faisceau laser continu est rendu intermittent, puis il est focalisé sur la surface du cylindre à traiter où il détruit localement, par fusion, la matière constitutive du cylindre. On réalise le traitement de toute la surface en mettant le cylindre en rotation autour de son axe et en déplaçant parallèlement à cet axe, le faisceau focalisé qui balaye ainsi la totalité de la surface.

Au cours de ces mouvements, la zone d'impact du faisceau sur la surface du cylindre décrit une trajectoire hélicoïdale le long de laquelle sont distribuées les microperforations désirées.

Lorsque l'on désire opérer sans rendre le faisceau intermittent, la rugosité obtenue présente un important degré d'anisotropie, puisqu'elle est constituée par une sorte de «filet» qui se traduit, au laminage, par des lignes dans la surface de la tôle, dans la direction du laminage. L'utilisation d'un faisceau laser continu ou intermittent est connue par le JP-A-56 116 821.

Il convient cependant de réduire, ou si possible, d'éliminer cette anisotropie, car elle compromet l'aspect des tôles laminées et elle nuit à l'isotropie de leurs propriétés d'emploi. Ce dernier effet est particulièrement indésirable dans le cas du formage à la presse, par exemple de l'emboutissage.

La présente invention a pour objet un procédé permettant de créer, à la surface d'un cylindre, une rugosité isotrope au moyen d'un faisceau corpusculaire focalisé, continu ou partiellement intermittent, désigné ci-dessous par sensiblement continu.

La présente invention repose sur la constatation faite par le demandeur, selon laquelle l'isotropie désirée de la rugosité du cylindre ne peut être atteinte que si deux traces successives du faisceau laser sur la surface du cylindre présentent un recouvrement suffisant et non, comme on aurait pu s'y attendre, si elles sont simplement jointives.

Selon l'invention, le procédé pour former une rugosité isotrope à la surface d'un cylindre (1) à l'aide d'un faisceau corpusculaire (4) focalisé, sensiblement continu, dans lequel le cylindre tourne autour de son axe longitudinal (3) et ledit faisceau se déplace en translation, parallèlement à l'axe du cylindre, de façon à tracer, par fusion superficielle jusqu'à la profondeur désirée, dans la surface du cylindre, un sillon hélicoïdal dont la largeur est déterminée par le diamètre du faisceau focalisé, est caractérisé en ce que l'on règle la vitesse de rotation du cylindre et la vitesse relative de translation du faisceau de telle façon que le rapport entre le pas dudit sillon hélicoïdal et la largeur de ce même sillon hélicoïdal soit inférieur à 1 et que des sillons successifs ne soient pas jointifs.

Selon une variante particulière de ce procédé, la valeur dudit rapport est inférieure à 0,85.

Selon l'invention, on détermine cette valeur limite dudit rapport en fonction de la rugosité que l'on désire obtenir, c'est-à-dire en fonction de la dénivellation acceptable entre la crête du bourrelet et le fond du sillon hélicoïdal marqué dans la surface du cylindre par le passage du faisceau focalisé.

Selon une modalité particulière de mise en œuvre, on ajuste la puissance du faisceau focalisé et la vitesse de rotation du cylindre, de façon à obtenir le niveau de rugosité désiré, puis on adapte la vitesse de translation du faisceau en fonction de la vitesse de rotation du cylindre, de telle façon que le pas de la trajectoire hélicoïdale reste inférieur à une valeur critique, c'est-à-dire conduise à une valeur dudit rapport inférieure à sa valeur limite.

A titre d'exemple, destiné uniquement à illustrer le procédé de l'invention, on a obtenu un bon aspect de surface en assurant une dénivellation d'au moins 20 μm à l'aide d'un faisceau laser focalisé en une tache de 120 μm de diamètre décrivant une hélice de pas égal à 100 μm. Le rapport visé est dans ce cas égal à 0,83.

Egalement suivant l'invention, on insuffle dans la zone d'impact du faisceau laser un gaz, par exemple de l'oxygène, et on fait varier la direction, la vitesse, la pression et/ou le débit de jet de gaz, afin de modifier la valeur critique du pas d'hélice assurant la rugosité désirée.

En particulier, ce jet de gaz peut être modulé ou pulsé, par exemple au moyen d'un disque rotatif percé d'orifices et interrompant partiellement ou totalement le jet de gaz de façon appropriée.

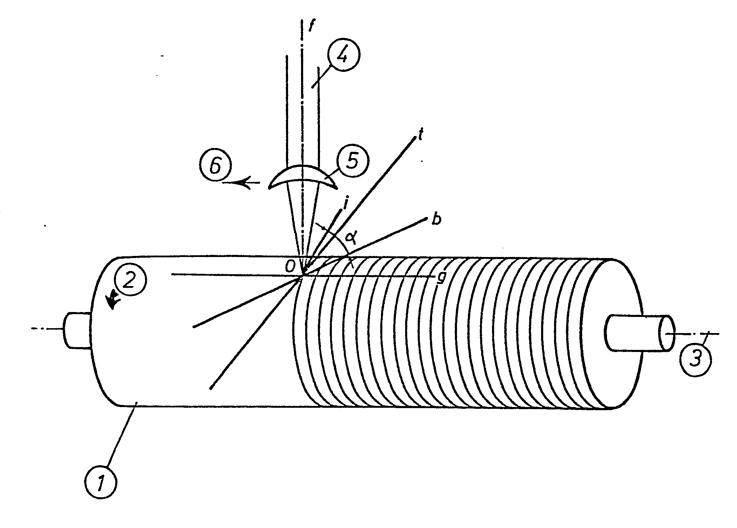

La figure jointe illustre une mise en œuvre du procédé de l'invention comportant l'utilisation d'un jet d'oxygène.

Le cylindre à traiter 1 est mis en rotation, selon la flèche 2, autour de son axe 3. Un faisceau laser 4, d'axe f est focalisé par une lentille 5 et frappe la surface du cylindre au point 0. Le faisceau laser se déplace en translation, selon la flèche 6 parallèle à l'axe 3. Le point 0 décrit une trajectoire hélicoïdale. Le plan tangent au cylindre au point 0 est représenté par la génératrice g du cylindre et la tangente t perpendiculaire à la génératrice g. La droite b, sensiblement bissectrice de l'angle gOt dans le plan (g, t), forme avec l'axe f du faisceau un plan dans lequel il est avantageux, selon l'invention, de pratiquer l'insufflation d'oxygène. La direction i du jet d'oxygène fait, avec la droite b, un angle α qui est de préférence compris entre 15° et 80°.

## Revendications

1. Procédé pour former une rugosité isotrope à la surface d'un cylindre (1) à l'aide d'un faisceau corpusculaire (4) focalisé, sensiblement continu, dans lequel le cylindre tourne autour de son axe longitudinal (3) et ledit faisceau se déplace en translation, parallèlement à l'axe du cylindre, de façon à tracer, par fusion superficielle jusqu'à la profondeur désirée, dans la surface du cylindre, un sillon hélicoïdal dont la largeur est déterminée par le diamètre du faisceau focalisé, caractérisé en ce que l'on règle la vitesse de rotation du cylindre et la vitesse relative de translation du faisceau de telle façon que le rapport entre le pas dudit sillon hélicoïdal et la largeur de ce même sillon hélicoïdal soit inférieur à 1 et que des sillons successifs ne soient pas jointifs.

2. Procédé suivant la revendication 1, caractérisé en ce que la valeur dudit rapport est inférieure à 0,85.

3. Procédé suivant la revendication 1 ou 2, caractérisé en ce que l'on insuffle un jet de gaz, de préférence d'oxygène, dans la zone de travail du faisceau, et en ce que le jet de gaz est incliné vers l'axe du faisceau d'un angle de 15° à 80° dans le plan défini par l'axe du faisceau et la bissectrice de l'angle formé par la génératrice du cylindre au point d'impact du faisceau et une tangente au cylindre perpendiculaire à ladite génératrice audit point d'impact.

## Claims

1. Method for forming an isotropic roughness on the surface of a cylinder (1) by means of a substantially continuous, focused particle beam (4), in which the cylinder turns about its longitudinal axis (3) and the said beam is displaced in translation, parallell to the axis of the cylinder, in such a manner as to trace, by surface fusion to the desired depth, in the surface of the cylinder, a helical groove, the width of which is determined by the diameter of the focused beam, characterized in that the speed of rotation of the cylinder and the relative speed of translation of the beam are regulated in such a manner that the ratio between the pitch of the said helical groove and the width of this same helical groove is less than 1 and that successive grooves are not contiguous.

2. Method according to Claim 1, characterized in that the value of the said ratio is less than 0.85.

3. Method according to Claim 1 or 2, characterized in that a jet of gas, preferably of oxygen, is blown into the zone of operation of the beam, and in that the jet of gas is inclined towards the axis of the beam at an angle of 15° to 80° in the plane defined by the axis of the beam and the bisector of the angle formed by the generatrix of the cylinder at the point of impact of the beam and a tangent to the cylinder perpendicular to the said generatrix at the said point of impact.

## Patentansprüche

1. Verfahren zur Erzeugung isotroper Rauhigkeit auf der Oberfläche einer Walze (1) mittels eines fokussierten, im wesentlichen kontinuierlichen Teilchenbündels (4), wobei die Walze sich um ihre Längsachse (3) dreht und besagtes Bündel sich parallel zur Walzenachse translatorisch verschiebt, derart dass durch oberflächliches Schmelzen auf die gewünschte Tiefe in der Walzenoberfläche eine wendelförmige Rille eingeschnitten wird, deren Breite vom Durchmesser des fokussierten Bündels bestimmt ist, dadurch gekennzeichnet, dass man die Umdrehungsgeschwindigkeit der Walze und die relative translatorische Geschwindigkeit des Bündels so regelt, dass das Verhältnis der Ganghöhe der besagten wendelförmigen Rille zu deren Breite weniger als 1 beträgt, und dass aufeinanderfolgende Rillen sich nicht berühren.

2. Verfahren nach Anspruch 1, dadurch gekennzeichnet, dass der Wert des besagten Verhältnisses kleiner als 0,85 ist.

3. Verfahren nach Anspruch 1 oder 2, dadurch gekennzeichnet, dass man einen Strahl eines Gases, vorzugsweise Sauerstoff, in die Wirkungszone des Bündels einbläst, und dass der Gasstrahl unter einem Winkel von 15° bis 80° in der durch die Achse des Bündels und die Halbierende des durch die Erzeugende des Zylinders am Auftreffpunkt des Bündels und eine zu dieser Erzeugenden am Auftreffpunkt senkrechten Tangente an den Zylinder gebildeten Winkels bestimmten Ebene gegen die Achse des Bündels geneigt ist.